# EUROPÄISCHE PATENTANMELDUNG

(11) **EP 4 606 517 A1**
(43) Veröffentlichungstag der Anmeldung: **27.08.2025**
(21) Anmeldenummer: 25155697.3
(22) Anmeldetag: 04.02.2025
(51) Int. Cl.: B23Q 3/18, B23Q 7/10, B23Q 7/14, B23Q 1/00

(54) **WERKSTÜCKPALETTE UND REGALSPEICHERSYSTEM**

(71) Anmelder: Maschinenfabrik Berthold Hermle AG, 78559 Gosheim (DE)
(72) Erfinder: WÄSCHLE, Stefan, 72364 Obernheim (DE); BERNHARD. Franz-Xaver, 78549 Spaichingen (DE)
(74) Vertreter: Patentanwälte Magenbauer & Kollegen Partnerschaft mbB

(57) **Zusammenfassung**

Die Erfindung betrifft eine Werkstückpalette (1; 31; 51) zur Verwendung in einer Bearbeitungsmaschine (100), mit einer, insbesondere als Planparallelplatte ausgebildeten, Trägerplatte (2; 32; 52), die an einer Oberseite (3) eine Werkstückauflage zur Aufnahme eines Werkstücks (83) aufweist und die an einer der Oberseite (3) entgegengesetzten Unterseite (4; 34) mit Spannzapfen(6) oder mit Spannbuchsen versehen ist, die für eine Fixierung der Trägerplatte (2; 32; 52)an einem Werkstücktisch der Bearbeitungsmaschine (100) ausgebildet sind, wobei einer Vorderseite (5) der Trägerplatte (2; 32; 52), die zwischen der Oberseite (3) und der Unterseite (4) erstreckt ist, eine Kupplung (7) für eine formschlüssige Kopplung mit einem Manipulator (92) zugeordnet ist und wobei der Unterseite (4) der Trägerplatte (2; 32; 52) eine Positionierfläche (20, 21; 40, 41; 60, 61) zugeordnet ist, die mit einem Abstand von der Vorderseite (5) angeordnet ist und die in einem Winkel von 90 Grad zur Oberseite (3) und/oder parallel zur Vorderseite (5) ausgerichtet ist.

## Beschreibung

Die Erfindung betrifft eine Werkstückpalette und ein Regalspeichersystem.

Aus der EP 3 235 592 A1 ist eine Regalspeichereinheit zur Verwendung in einer Automationsanlage für eine Speicherung von Werkstücken und/oder Werkstückpaletten und/oder Werkzeugen bekannt. Die Regalspeichereinheit umfasst ein Grundgestell, das einen Regalständer und zwei beabstandet zueinander angeordnete Regalseitenteile aufweist, wobei einander zugewandte Oberflächen der Regalseitenteile mit Schnittstellen zur Anbringung von Ablagevorrichtungen ausgebildet sind.

Die Aufgabe der Erfindung besteht darin, eine Werkstückpalette und ein Regalspeichersystem bereitzustellen, mit denen eine vorteilhafte Handhabung von Werkstückpaletten ermöglicht wird.

Diese Aufgabe wird für eine Werkstückpalette zur Verwendung in einer Bearbeitungsmaschine dadurch gelöst, dass die Werkstückpalette eine, insbesondere als Planparallelplatte ausgebildete, Trägerplatte aufweist, die an einer Oberseite eine Werkstückauflage zur Aufnahme eines Werkstücks bildet und die an einer der Oberseite entgegengesetzten Unterseite mit Spannzapfen oder Spannbuchsen versehen ist, die für eine Fixierung der Trägerplatte an einem Werkstücktisch der Bearbeitungsmaschine ausgebildet sind, wobei einer Vorderseite der Trägerplatte, die zwischen der Oberseite und der Unterseite erstreckt ist, eine Kupplung für eine form- und/oder kraftschlüssige Kopplung mit einem Manipulator zugeordnet ist und wobei der Unterseite der Trägerplatte eine Positionierfläche zugeordnet ist, die mit einem Abstand von der Vorderseite angeordnet ist und die in einem Winkel von 90 Grad zur Oberseite und/oder parallel zur Vorderseite ausgerichtet ist.

Die Werkstückpalette dient dazu, ein Werkstück in einfacher Weise mit hoher Positioniergenauigkeit und hoher Wiederholgenauigkeit an einem Maschinentisch einer Bearbeitungsmaschine, insbesondere einer Zerspanungsmaschine wie beispielsweise einem Bearbeitungszentrum, festzulegen. Ferner hat die Werkstückpalette die Aufgabe, die bei der Durchführung eines Zerspanungsvorgangs auf das zu bearbeitende Werkstück eingeleiteten Bearbeitungskräfte aufzunehmen und auf dem Maschinentisch der Bearbeitungsmaschine weiterzuleiten. Hierzu ist vorgesehen, dass das Werkstück auf einer Werkstückauflage der Werkstückpalette festgelegt wird. Diese Festlegung kann beispielsweise durch Anschrauben des Werkstücks an der Werkstückpalette und/oder durch Verwendung von Spannpratzen oder anderen Spannmitteln verwirklicht werden. Die Werkstückauflage wird von einer Oberseite einer Trägerplatte bestimmt, wobei die Trägerplatte üblicherweise aus einem metallischen Werkstoff wie Aluminium oder Stahl hergestellt ist. Werkstückpaletten stehen in Abhängigkeit von der Größe des Werkstücks, dem Gewicht des Werkstücks und den vorgesehenen Bearbeitungsvorgängen für das Werkstück in unterschiedlichen Abmessungen zur Verfügung.

Um die Anforderungen der hohen Positioniergenauigkeit und der hohen Wiederholgenauigkeit für die Platzierung der Werkstückpaletten auf dem Maschinentisch der Bearbeitungsmaschine zu gewährleisten und eine zuverlässige Kraftübertragung zwischen der Werkstückpaletten und dem Maschinentisch sicherzustellen, sind an einer Unterseite der Trägerplatte mehrere Spannzapfen oder Spannbuchsen angeordnet, die beispielsweise mit einem Gewindeabschnitt bei dem Spannzapfen oder mit Befestigungsschrauben bei der Spannbuchse in die Unterseite der Trägerplatte eingeschraubt sind. Die Spannzapfen oder die Spannbuchsen sind für einen Eingriff in korrespondierende Gegenstücke im Maschinentisch oder auf dem Maschinentisch der Bearbeitungsmaschine ausgebildet und weisen jeweils eine Geometrie auf, mit der eine kraftschlüssige und/oder formschlüssige Verriegelung durch eine im Maschinentisch oder auf dem Maschinentisch der Bearbeitungsmaschine vorgesehene Spannmechanik bewirkt werden kann. Hierdurch wird eine positionsgenaue und wiederholbare Festlegung der Werkstückpaletten am Maschinentisch ermöglicht, weshalb hierfür auch der Begriff der Nullpunktspannung verwendet wird.

Bevorzugt ist vorgesehen, dass die Trägerplatte als Planparallelplatte ausgebildet ist, bei der die Oberseite eben ausgebildet ist und bei der die Unterseite eben ausgebildet sind, wobei die Oberseite und die Unterseite parallel zueinander ausgerichtet sind.

Die Oberseite und die Unterseite der Trägerplatte werden von einer umlaufenden Verbindungfläche miteinander verbunden, wobei diese Verbindungsfläche vorzugsweise in einem Winkel von 90 Grad und damit rechtwinklig sowohl zur Oberseite als auch zu Unterseite ausgerichtet ist. Die Verbindungfläche weist typischerweise mehrere Abschnitte auf, die bei einer beispielsweise quadratisch ausgebildeten Oberseite und Unterseite der Trägerplatte als Vorderseite, Rückseite, linke Seitenfläche und rechte Seitenfläche bezeichnet werden können und die in diesem exemplarischen Fall jeweils rechtwinklig zueinander ausgerichtet sind und jeweils als Rechteck ausgebildet sind.

An der Vorderseite der Trägerplatte ist eine Kupplung angeordnet, die für eine Kopplung mit einem Manipulator, beispielsweise einem Endeffektor wie einer Greiferachse eines Industrieroboters, ausgebildet ist. Bevorzugt ist vorgesehen, dass die Kupplung in einer Raumrichtung von der Vorderseite abragt, die quer zur Vorderseite ausgerichtet ist. Besonders bevorzugt ist vorgesehen, dass die Kupplung bezogen auf die Raumrichtung, in der sie von der Vorderseite abragt, wenigstens einen Hinterschnitt aufweist, der für eine formschlüssige und/oder kraftschlüssige Kopplung mit dem Endeffektor in dieser Raumrichtung genutzt wird. Der Hinterschnitt kann beispielsweise dazu genutzt werden, eine Zugkraft auf die Kupplung und die damit verbundene Trägerplatte auszuüben, wobei diese Zugkraft zumindest im Wesentlichen quer zur Oberfläche der Vorderseite der Trägerplatte ausgerichtet ist.

Während für die Durchführung der Bearbeitung des Werkstücks in der Bearbeitungsmaschine eine hochgenaue Positionierung der Werkstückpaletten gegenüber dem Werkstücktisch der Bearbeitungsmaschine erforderlich ist, genügt für die Aufbewahrung einer Werkstückpalette, die gegebenenfalls mit einem Werkstück oder mit mehreren Werkstücken bestückt ist, eine deutlich geringere Positioniergenauigkeit, die jedoch gewährleisten muss, dass benachbart angeordnete Werkstückpaletten und gegebenenfalls darauf angebrachte Werkstücke nicht miteinander kollidieren und dass ein Ergreifen der Werkstückpalette mit dem Manipulator nicht in Frage gestellt ist. Prinzipiell könnte hierzu vorgesehen werden, die Werkstückpalette auf eine Regalplatte eines Palettenregals abzustellen, wobei die Regalplatte mit Vertiefungen versehen ist, die mit den Spannzapfen oder Spannbuchsen an der Unterseite der Trägerplatte korrespondieren. Aufgrund der großen Vielfalt von unterschiedlichen Formaten für Werkstückpaletten und der damit verbundenen Vielzahl von Varianten für die Anordnung von Spannzapfen oder Spannbuchsen ist es schwierig, eine sinnvolle Anordnung für die Vertiefungen in der Regalplatte zu finden, bei der stets gewährleistet ist, dass die Werkstückpalette zuverlässig und mit einer vorhersehbaren räumlichen Ausrichtung im Palettenregal aufgenommen ist.

Um dennoch eine ausreichend präzise Vorgabe für die räumliche Ausrichtung der Werkstückpaletten im Palettenregal machen zu können, weist die Werkstückpalette an der Unterseite eine Positionierfläche auf, die für eine mechanische Wechselwirkung mit einer korrespondierenden Ausrichtfläche, die am Palettenregal vorgesehen ist, auf. Die Positionierfläche ist abseits der Vorderseite der Trägerplatte angeordnet, sodass bei einer Handhabung der Werkstückpaletten keine unerwünschte Wechselwirkung zwischen dem Manipulator, der mit der Kupplung gekoppelt wird, und der Positionierfläche eintritt. Um eine vorteilhafte Ausrichtung der Werkstückpalette im Palettenregal zu gewährleisten ist die Positionierfläche in einem Winkel von 90 Grad zur Oberseite der Trägerplatte und/oder parallel zur Vorderseite der Trägerplatte ausgerichtet.

Vorteilhafte Weiterbildungen der Erfindung sind Gegenstand der Unteransprüche.

Zweckmäßig ist es, wenn die Positionierfläche als, insbesondere der Vorderseite abgewandte, Seitenwand einer Quernut ausgebildet ist, wobei eine längste Erstreckungsachse der Quernut parallel zur Vorderseite erstreckt ist. Die Ausführung der Positionierfläche als Seitenwand einer Quernut ermöglicht eine kostengünstige Herstellung der Positionierfläche, da eine solche Quernut beispielsweise im Zuge eines Fräsbearbeitungsvorgangs für die Trägerplatte hergestellt werden kann. Beispielhaft wird die Positionierfläche mit Hilfe eines Schreibenfräsers oder eines Schaftfräsers, der in einer parallel zur Vorderseite ausgerichteten Vorschubrichtung eine zumindest im Wesentlichen U-förmig profilierte Quernut in die Werkstückpaletten einbringt, hergestellt. Dabei kann eine der Vorderseite abgewandte Seitenfläche oder eine der Vorderseite zugewandte Seitenfläche der Quernut als Positionierfläche genutzt werden. Bei dieser Ausführungsform der Positionierfläche ist vorgesehen, dass die Ausrichtfläche des Palettenregals von einer Leiste gebildet wird, die von der Regalplatte in vertikaler Richtung nach oben abragt.

Alternativ ist vorgesehen, dass die Positionierfläche als, insbesondere ebene, größte Oberfläche einer der Trägerplatte zugeordneten, plattenförmig ausgebildeten Querleiste ausgebildet ist. Die Querleiste erstreckt sich vorzugsweise in der gleichen Raumrichtung wie die Spannzapfen, also bei bestimmungsgemäßer Nutzung der Werkstückpalette ausgehend von der Unterseite der Trägerplatte in vertikaler Richtung nach unten. Bevorzugt ist vorgesehen, dass ein Abstand zwischen der Unterseite der Trägerplatte und einer Unterkante der Querleiste größer als ein Abstand zwischen der Unterseite der Trägerplatte und einer der Trägerplatte abgewandten Stirnfläche der Spannzapfen oder Spannbuchsen ist. Hierdurch wird ein Eingreifen der Querleiste in eine korrespondierende Quernut einer Regalplatte eines Palettenregals ermöglicht, wobei die Stirnfläche der Spannzapfen auf einer Auflagefläche aufstehen, die von der Regalplatte bestimmt wird und die Quernut in die Auflagefläche der Regalplatte eingebracht ist. Beispielhaft ist vorgesehen, dass die Querleiste als streifenförmige, rechteckige Planparallelplatte ausgebildet ist, bei der die größten Oberflächen voneinander abgewandt sind und parallel zueinander ausgerichtet sind.

Bevorzugt ist vorgesehen, dass die Kupplung als Einzugsbolzen ausgebildet ist, der abschnittsweise in einer Koppelplatte festgelegt ist, die mit der Vorderseite der Trägerplatte verbunden ist. Die Aufgabe der Koppelplatte, die zwischen der Trägerplatte und der Kupplung angeordnet ist, besteht in einer Verteilung des Kraftflusses zwischen dem Manipulator und der Trägerplatte. Da die Trägerplatte durch ein darauf aufgenommenes Werkstück mit einer erheblichen Gewichtskraft belastet werden kann und zur Vermeidung eines hohen Gewichts für die Werkstückpalette typischerweise aus Aluminium hergestellt ist, ist es vorteilhaft, die über die Kupplung an der Vorderseite der Trägerplatte einzuleitenden Haltekräfte für Trägerplatte und darauf aufgenommenes Werkstück zunächst von der Kupplung auf die Koppelplatte einzuleiten, die beispielsweise aus einem hochfesten Stahl hergestellt sein kann. Die Koppelplatte ist ihrerseits mit der Vorderseite der Trägerplatte verbunden, ermöglicht jedoch im Gegensatz zu Kupplung eine großflächigere Kraftübertragung in die Trägerplatte. Die als Einzugsbolzen ausgestaltete Kupplung ermöglicht die Einleitung einer Zugkraft, die vom Manipulator auf die Werkstückpalette auszuüben ist, wobei die Werkstückpaletten durch diese Zugkraft in eine zumindest kraftschlüssige (reibschlüssige), vorzugsweise in eine kraftschlüssige und formschlüssige Kopplungsverbindung mit dem Manipulator gebracht wird. Bevorzugt ist vorgesehen, dass die Kupplung oder die Koppelplatte eines Oberflächenabschnitt aufweisen, der korrespondieren zu einem Oberflächenabschnitt des Manipulators ausgebildet ist und mit dem eine Beschränkung wenigstens eines Freiheitsgrades der Bewegung, insbesondere eine Verdrehsicherung, gewährleistet werden kann. Bei diesem Oberflächenabschnitt kann es sich beispielsweise um eine ebene Fläche handeln, die in einem Winkel von beispielsweise 45 Grad zur Vorderseite der Trägerplatte ausgerichtet ist.

Bei einer Weiterbildung der Erfindung ist vorgesehen, dass die Querleiste zwischen der Koppelplatte und der Trägerplatte aufgenommen ist und in einer der Oberseite der Trägerplatte abgewandten Raumrichtung von der Koppelplatte und der Trägerplatte abragt und/oder eine parallel zur Oberseite ausgerichtete Unterkante aufweist. Da für eine Kraftübertragung zwischen der Gruppe Platte und der Trägerplatte ohnehin die Verwendung von Befestigungsmitteln, beispielsweise von Schrauben, erforderlich ist, ermöglicht die Anordnung der Querleiste zwischen der Koppelplatte und der Trägerplatte die Festlegung der Querleiste ohne zusätzlichen Aufwand. Da die Aufgabe der Querleiste darin besteht, eine räumliche Ausrichtung der Werkstückpalette bei einer Lagerung in einem Palettenregal zumindest bei einem bestimmungsgemäßen Gebrauch der Werkstückpaletten und des Palettenregal zu gewährleisten, ist es vorgesehen, dass die Querleiste in vertikaler Richtung nach unten abragt und hiermit in eine nutförmige Vertiefung in der Auflagefläche der Regalplatte des Palettenregals eingreifen kann. Vorteilhaft ist es, wenn eine der Trägerplatte abgewandte Unterkante der Querleiste parallel zur Oberseite ausgerichtet ist, um eine vorteilhafte Ausrichtung der Werkstückpaletten im Palettenregal zu gewährleisten.

Bei einer alternativen Ausgestaltung der Erfindung ist vorgesehen, dass die Quernut in der Unterseite der Trägerplatte ausgebildet ist.

Zweckmäßig ist es, wenn die Quernut in einer, vorzugsweise parallel zur Oberseite der Trägerplatte ausgerichteten, Unterseite der Koppelplatte ausgebildet ist. Hierbei ist vorteilhaft, dass die Trägerplatte nicht durch eine Quernut geschwächt wird. Vielmehr wird die Quernut in die ohnehin aufgrund der Materialauswahl (Stahl anstelle von Aluminium) sehr viel stabilere und in der Praxis aufgrund der Hebelverhältnisse weniger belastete Koppelplatte eingebracht.

Bevorzugt ist vorgesehen, dass die Kupplung als Einzugsbolzen ausgebildet ist, der in der Vorderseite der Trägerplatte festgelegt ist, und dass die Quernut in der Unterseite der Trägerplatte ausgebildet ist. Diese Anordnung der Quernut ist insbesondere dann von Interesse, wenn die Werkstückpalette ausschließlich für leichte Werkstücke eingesetzt wird.

Die Aufgabe der Erfindung wird auch durch ein Regalspeichersystem zur Einlagerung von Werkstückpaletten gelöst. Hierbei umfasst das Regalspeichersystem ein Palettenregal, das einen Regalkörper und wenigstens eine Regalplatte mit einer Auflagefläche aufweist, die eine Auflageebene zur Aufnahme von Werkstückpaletten bestimmt, wobei die Regalplatte einen, vorzugsweise rechtwinklig, an die Auflagefläche angrenzenden, ersten Stirnflächenbereich aufweist, der am Regalkörper anliegt, und wobei die Regalplatte einen, vorzugsweise rechtwinklig, an die Auflagefläche angrenzenden, zweiten Stirnflächenbereich aufweist, der abseits des Regalkörpers angeordnet ist, wobei beabstandet zum zweiten Stirnflächenbereich eine Ausrichtfläche ausgebildet ist, die in einem 90-Grad-Winkel zur Auflagefläche ausgerichtet ist und die für eine Wechselwirkung mit einer Positionierfläche einer Werkstückpalette ausgebildet ist.

Das Regalspeichersystem umfasst zumindest ein Palettenregal, das zur Aufnahme mehrerer, insbesondere unterschiedlich geformter und/oder konfigurierter Werkstückpaletten sowie darauf aufgespannter Werkstücke ausgebildet ist. Das Palettenregal umfasst seinerseits einen Regalkörper, der üblicherweise aus einer linken Regalseitenwand und einer rechten Regalseitenwand gebildet ist. Je nach Ausgestaltung des Palettenregals handelt es sich bei den Regalseitenwänden um separate Bauteile, wie dies beispielsweise bei einer Ausführung eines Palettenregals in Metallbauweise der Fall ist. Andere Kombinationen von Seitenwänden und/oder einer Rückwand sind ebenfalls möglich. Entscheidend ist, dass der Regalkörper dazu ausgebildet ist, wenigstens eine Regalplatte zu tragen. Die Regalplatte weist eine auch als Auflagefläche bezeichnete Oberseite auf, die zumindest überwiegend eben ausgestaltet ist und damit auch eine Auflageebene für Werkstückpaletten bestimmt.

Beispielhaft ist die Regalplatte als Planparallelplatte ausgebildet und grenzt mit einem ersten Stirnflächenbereich an die linke Seitenwand, an eine gegebenenfalls vorhandene Rückseite des Regalkörpers und an die rechte Seitenwand an. Ein weiterer Bereich der Stirnfläche, der weder gegenüberliegend zu einer der Seitenwände noch gegenüberliegend zur Rückseite ausgerichtet ist, wird als zweiter Stirnflächenbereich bezeichnet. Um eine vorteilhafte Ausrichtung von Werkstückpaletten im Palettenregal gewährleisten zu können ist die wenigstens eine Regalplatte des Palettenregals mit einer Ausrichtfläche versehen, die beabstandet zum zweiten Stirnflächenbereich angeordnet ist. Die Aufgabe dieser Ausrichtfläche besteht darin, in Wechselwirkung mit der Positionierfläche, die an der Werkstückpaletten ausgebildet ist, eine einfache und gut reproduzierbare räumliche Ausrichtung einer Werkstückpalette gegenüber dem Palettenregal zu gewährleisten.

Hierzu ist die Ausrichtfläche rechtwinklig zur Auflagefläche und beabstandet zum zweiten Stirnflächenbereich angeordnet.

Bei einer Weiterbildung des Regalspeichersystems ist vorgesehen, dass der zweite Stirnflächenbereich als ebene Fläche ausgebildet ist.

In weiterer Ausgestaltung des Regalspeichersystems ist vorgesehen, dass die Ausrichtfläche als, insbesondere dem zweiten Stirnflächenbereich abgewandte, Seitenwand einer in die Auflagefläche eingebrachten Quernut ausgebildet ist. Hierbei wird davon ausgegangen, dass die Werkstückpaletten mit einer Querleiste ausgerüstet ist, die derart auf die Quernut in der Auflagefläche angepasst ist, dass die Querleiste zumindest Rotationsbewegungen der im Regalspeicher aufgenommenen Werkstückpalette um eine vertikal ausgerichtete Hochachse sowie Verschiebebewegungen der Werkstückpalette in einer Raumrichtung quer zur zweiten Stirnfläche verhindert.

Bei einer vorteilhaften Ausführungsform des Regalspeichersystems ist vorgesehen, dass die Ausrichtfläche als, insbesondere ebene, größte Oberfläche einer plattenförmig ausgebildeten und quer zur Auflagefläche in vertikaler Richtung nach oben abragenden Querleiste ausgebildet ist. Hierbei ist vorteilhaft, dass an der Werkstückpalette auf eine Querleiste verzichtet werden kann, die möglicherweise bei einem Aufsetzen der Werkstückpalette auf einen Maschinentisch einer Bearbeitungsmaschine störend sein kann. In diesem Fall ist vorzusehen, dass an der Unterseite der Werkstückpaletten eine Quernut ausgebildet ist, sodass die Querleiste des Regalspeichersystems in die Quernut der Werkstückpaletten eingreifen kann.

vorzugsweise ist vorgesehen, dass beabstandet zu dem Palettenregal eine Messeinrichtung angeordnet ist, die einer Bearbeitungsmaschine, insbesondere einer Zerspanungsmaschine, oder einer Materialschleuse einer Bearbeitungsmaschine oder einem Rüstplatz zugeordnet ist und die für eine Ermittlung einer Höhenausdehnung und/oder einer Breitenausdehnung einer Werkstückpalette und eines auf der Werkstückpalette aufgenommenen Werkstücks sowie für die Bereitstellung der ermittelten Höhenausdehnung und/oder Breitenausdehnung an ein Lagerverwaltungssystem ausgebildet ist.

Die Messeinrichtung ist somit für eine Ermittlung einer Höhenausdehnung und/oder einer Breitenausdehnung, insbesondere eines Querschnitts, einer Kombination aus Werkstückpaletten und darauf aufgenommenen Werkstück ausgebildet und wird neben anderen Aufgaben dafür genutzt, den gewonnenen Messwert bzw. die gewonnenen Messwerte einem Lagerverwaltungssystem zur Verfügung zu stellen. Das Lagerverwaltungssystem kann beispielsweise als Computerprogramm in einer speicherprogrammierbaren Steuerung verwirklicht sein, wobei die speicherprogrammierbare Steuerung unter anderem dafür eingesetzt werden kann, einen Manipulator zu steuern, mit dessen Hilfe Werkstückpaletten in einem Palettenregal abgelegt oder aus dem Palettenregal entnommen werden können.

Dabei ist das Lagerverwaltungssystem darauf ausgerichtet, eine möglichst raumsparende Anordnung von Werkstückpaletten in dem wenigstens einem Palettenregal vorzusehen. Hierzu verarbeitet das Lagerverwaltungssystem die Messwerte, die von der Messeinrichtung zur Verfügung gestellt werden und gleicht die hierdurch gewonnenen Informationen mit gespeicherten Informationen über bereits im Palettenregal aufgenommenen Werkstückpaletten mit darauf angebrachten Werkstücken ab, um anschließend entscheiden zu können, an welcher Stelle im Palettenregal diejenige Werkstückpalette transportiert werden soll, die mit Hilfe der Messeinrichtung vermessen wurde.

Zweckmäßig ist es daher, wenn ein Lagerverwaltungssystem für eine Übertragung von Messwerten mit der Messeinrichtung verbunden ist und dass das Lagerverwaltungssystem für eine Vorgabe von Lagerplätzen für Werkstückpaletten oder Werkstückpaletten mit daran aufgenommenen Werkstücken im Palettenregal ausgebildet ist.

Vorteilhaft ist es, wenn das Lagerverwaltungssystem für eine Bereitstellung von Lagerpositionsdaten an einen Manipulator aus der Gruppe: Gabelstapler, selbstfahrendes Flurförderfahrzeug, mobiler und/oder linear verfahrbarer Industrieroboter, stationärer Industrieroboter, ausgebildet ist, wobei der Manipulator für eine Platzierung von Werkstückpaletten in das Palettenregal oder in die Bearbeitungsmaschine und für eine Entnahme von Werkstückpaletten aus dem Palettenregal oder aus der Bearbeitungsmaschine ausgebildet ist.

Vorteilhafte Ausführungsformen der Erfindung sind in der Zeichnung dargestellt. Hierbei zeigt:
- Figur 1: eine streng schematische Seitenansicht eine ersten Ausführungsform einer Werkstückpalette sowie einer hierauf angepassten Regalplatte eines Regalspeichers,
- Figur 2: eine streng schematische perspektivische Darstellung mehrerer Werkstückpaletten und einer Regalplatte gemäß der Ausführungsform der Figur 1,
- Figur 3: eine streng schematische Seitenansicht eine zweiten Ausführungsform einer Werkstückpalette sowie einer hierauf angepassten Regalplatte eines Regalspeichers,
- Figur 4: eine streng schematische perspektivische Darstellung mehrerer Werkstückpaletten und einer Regalplatte gemäß der Ausführungsform der Figur 3,
- Figur 5: eine streng schematische Seitenansicht eine dritten Ausführungsform einer Werkstückpalette sowie einer hierauf angepassten Regalplatte eines Regalspeichers,
- Figur 6: eine streng schematische perspektivische Darstellung mehrerer Werkstückpaletten und einer Regalplatte gemäß der Ausführungsform der Figur 5, und
- Figur 7: eine streng schematische Darstellung eines Regalspeichersystems mit zwei Regalspeichern, einem linear verfahrbaren Industrieroboter, einer Bearbeitungsmaschine sowie einem Rüstplatz mit vorgelagerter Messeinrichtung.

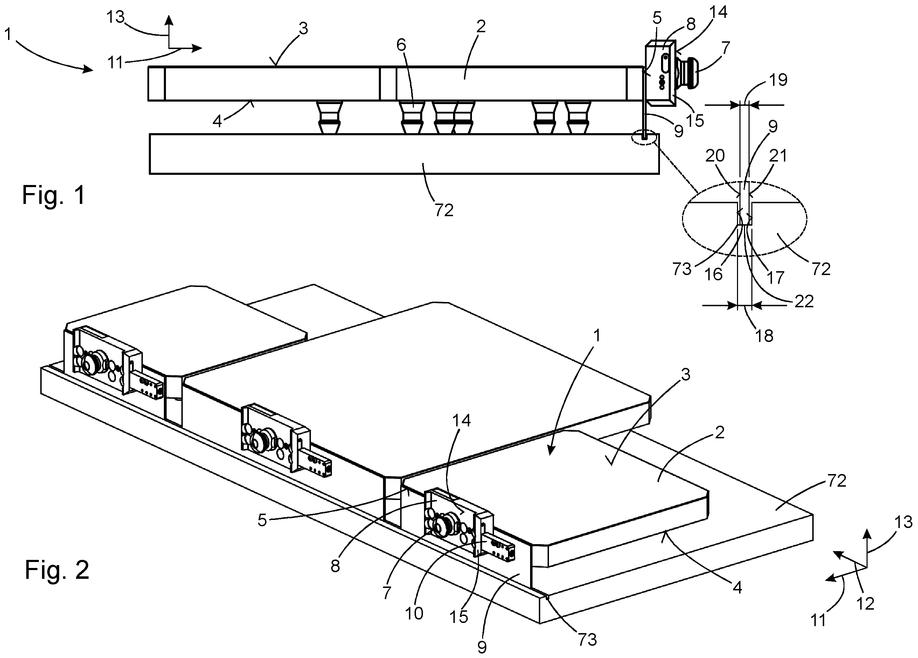

Eine in der Figur 1 gezeigte erste Ausführungsform einer Werkstückpalette 1 umfasst als wesentliche Komponenten eine Trägerplatte 2, mehrere Spannzapfen 6, eine Kupplung 7, eine Koppelplatte 8 und eine Querleiste 9.

Die Werkstückpalette 1 ist zur Aufnahme eines nicht dargestellten Werkstücks vorgesehen, wobei das Werkstück auf eine Oberseite 3 der Trägerplatte 2 aufgelegt und dort mit nicht dargestellten Befestigungsmitteln festgelegt wird.

Eine der Oberseite 3 abgewandte Unterseite 4 der Trägerplatte 2 ist mit mehreren Spannzapfen 6 versehen, die in einer Weise profiliert ausgebildet sind, dass sie in einem Maschinentisch einer nicht dargestellten Bearbeitungsmaschine durch eine ebenfalls nicht dargestellte Spannmechanik festgelegt werden können. Beispielhaft ist vorgesehen, dass die Spannzapfen 6 mit nicht dargestellten Gewindeabschnitten in die Trägerplatte 2 eingeschraubt sind.

An einer zwischen der Oberseite 3 und der Unterseite 4 erstreckten Vorderseite 5 der Trägerplatte 2 ist eine streifenförmig ausgebildete Querleiste 9 angebracht, die zwischen der Vorderseite 5 und einer mit der Vorderseite 5 in nicht dargestellter Weise mechanisch verbundenen Koppelplatte 8 angeordnet und festgelegt ist. Eine Unterseite 22 der Querleiste 9 ist rein exemplarisch parallel zur Oberseite 3 der Trägerplatte 2 ausgerichtet.

Wie der Darstellung der Figur 1 entnommen werden kann, erstreckt sich die Querleiste 9 in vertikaler Richtung nach unten über die Spannzapfen 6, die in der Darstellung der Figur 1 auf einer schematisch dargestellten Regalplatte 72 aufliegen. Die Regalplatte 72 ist mit einer Quernut 73 versehen, in die die Querleiste 9 eingreift. Hierdurch wird bezogen auf eine Hochachse 13 der Werkstückpalette 1 eine Verdrehsicherung für die Werkstückpalette 1 gegenüber der Regalplatte 72 bewirkt. Ferner wird durch den Eingriff der Querleiste 9 in die Quernut 73 ein Formschluss entlang einer Längsachse 11 der Werkstückpalette 1 bewirkt. Wie der Detaildarstellung der Figur 1 entnommen werden kann, ist die Quernut 73 in einer nicht dargestellten Querschnittsebene, die senkrecht zu einer Querachse 12 der Werkstückpalette 1 ausgerichtet ist, U-förmig profiliert und weist einander gegenüberliegende Seitenwände 16, 17 auf, wobei wenigstens eine der beiden Seitenwände 16, 17 als Ausrichtfläche dient. Ein Abstand 18 der beiden Seitenwände 16, 17 ist größer als eine Dicke 19 der Querleiste 9, wobei der Abstand 18 der beiden Seitenwände 16, 17 und die Dicke 19 derart aufeinander abgestimmt sind, dass die Querleiste 9 ohne allzu hohe Anforderungen an die Positioniergenauigkeit beim Ablegen der Werkstückpalette 1 auf der Regalplatte 72 in die Quernut 73 eingreifen kann. Hierbei dient entweder eine der Koppelplatte 8 abgewandte größte Oberfläche 20 der Querleiste 9 oder eine der Koppelplatte 8 zugewandte größte Oberfläche 21 der Querleiste 9 als Positionierfläche.

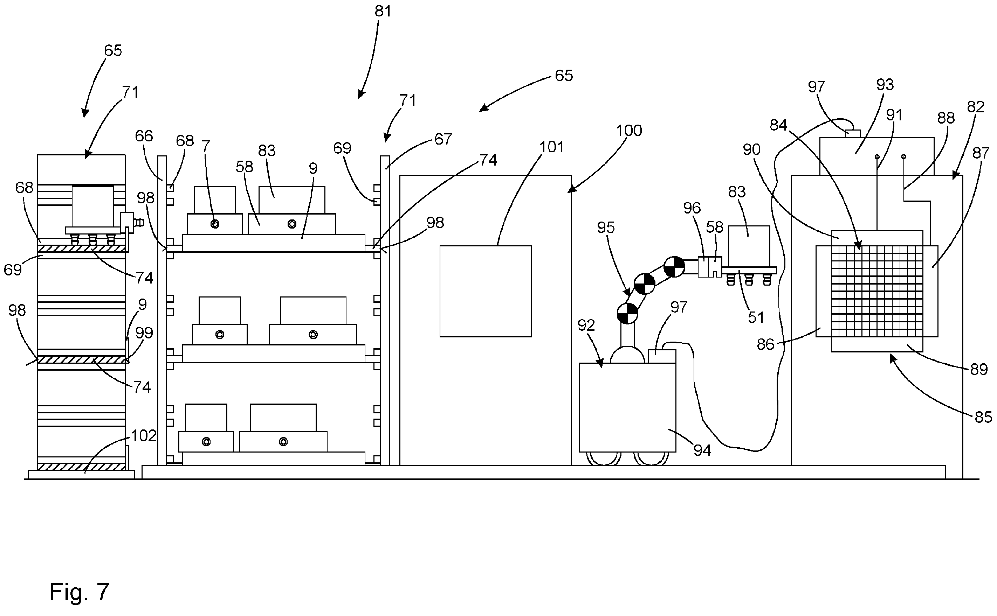

Rein exemplarisch ist vorgesehen, dass die Trägerplatte 2 als Planparallelplatte ausgebildet ist und beispielhaft aus Aluminium hergestellt ist. Die Querleiste 9 ist beispielhaft aus einem Federstahl hergestellt, um bei geringen Abmessungen eine hohe Deformationsfestigkeit gewährleisten zu können. Die Koppelplatte 8 ist aus Stahl hergestellt und dient zur Einleitung von Haltekräften auf die Werkstückpalette 1, wobei diese Haltekräfte über eine der Koppelplatte 8 zugeordnete Kupplung 9 eingeleitet werden können. Die Kupplung 9 ist für eine formschlüssige Kopplung mit einem Manipulator 92 ausgebildet, wie er nachstehend in Zusammenhang mit der Figur 7 näher beschrieben wird.

Beispielhaft ist vorgesehen, dass die Koppelplatte 8 ausgehend von einer Stirnfläche 14, die der Trägerplatte 2 abgewandt ist und an der die Kupplung 7 festgelegt ist, beidseitig mit Schrägflächen 15 versehen ist, die für eine Anlage an korrespondierenden, nicht dargestellten Schrägflächen, Manipulator 92 ausgebildet sind, um eine Verdrehsicherung zwischen der Werkstückpalette 1 und dem Manipulator 92 zu gewährleisten.

Wie der Darstellung der Figur 2 entnommen werden kann, wird die Werkstückpalette 1 mit unterschiedlichen Größen der Trägerplatte 2 bereitgestellt. Hierbei ist die Anordnung der Kupplung 7 und der Koppelplatte 8 vorzugsweise unabhängig von der Größe der Trägerplatte 2. Die Breite der Querleiste 9 ist vorzugsweise an die Breite der jeweiligen Trägerplatte 2 angepasst. Beispielhaft ist vorgesehen, dass sich seitlich an die Koppelplatte 8 eine Stiftplatte 10 anschließt, die mit mehreren Gewindebohrungen und teilweise darin aufgenommenen Stiften versehen ist. Hierbei dienen die Stifte zur Codierung der Eigenschaften der jeweiligen Werkstückpalette 1 und können von einer dem Manipulator 92 zugeordneten Lesevorrichtung mechanisch abgetastet werden, um die codierten Informationen für die Handhabung der Werkstückpalette 1 nutzen zu können.

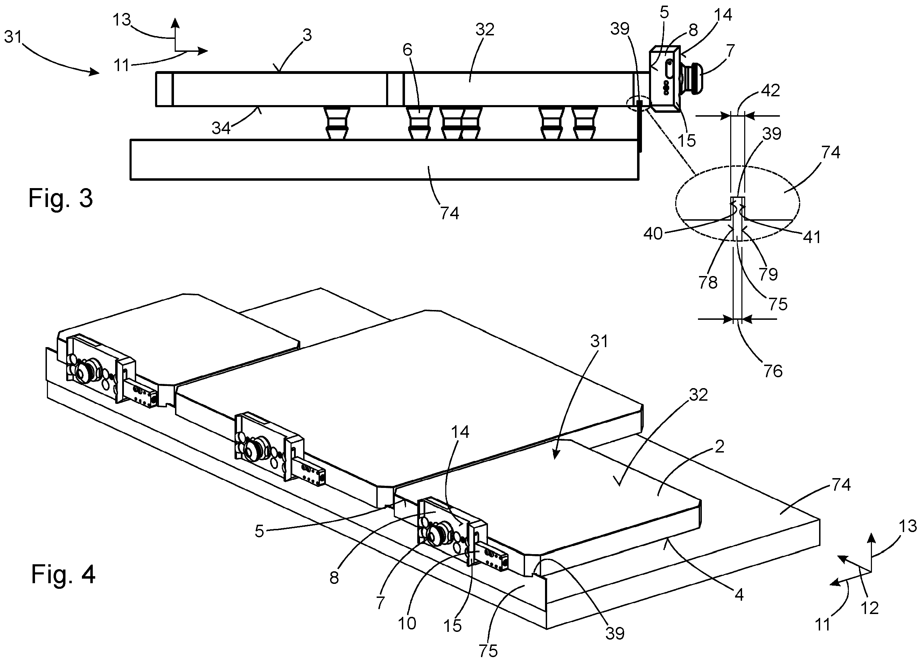

Die in den Figuren 3 und 4 gezeigte zweite Ausführungsform einer Werkstückpalette 31 weist im Wesentlichen den gleichen Aufbau auf wie die erste Ausführungsform der Werkstückpalette 1 gemäß den Figuren 1 und 2. Dementsprechend werden für identische oder zumindest funktionsgleiche Komponenten die gleichen Bezugszeichen verwendet. Der Unterschied der Werkstückpalette 31 gegenüber der Werkstückpalette 1 besteht darin, dass die Koppelplatte 8 unmittelbar an der Trägerplatte 32 angebracht ist und dass die Positionierflächen von Seitenflächen 40, 41 einer in die Unterseite 34 der Trägerplatte 32 eingebrachten Quernut 39 gebildet werden. In diese Quernut 39 greift eine Querleiste 75 ein, die an einer Vorderseite der Regalplatte 74 festgelegt ist. Die Ausrichtflächen werden von den größten Oberflächen 78, 79 der Querleiste 75 gebildet, die eine Dicke 76 aufweist, die kleiner als ein Abstand 42 der Seitenflächen 40, 41 der Quernut 39 ist.

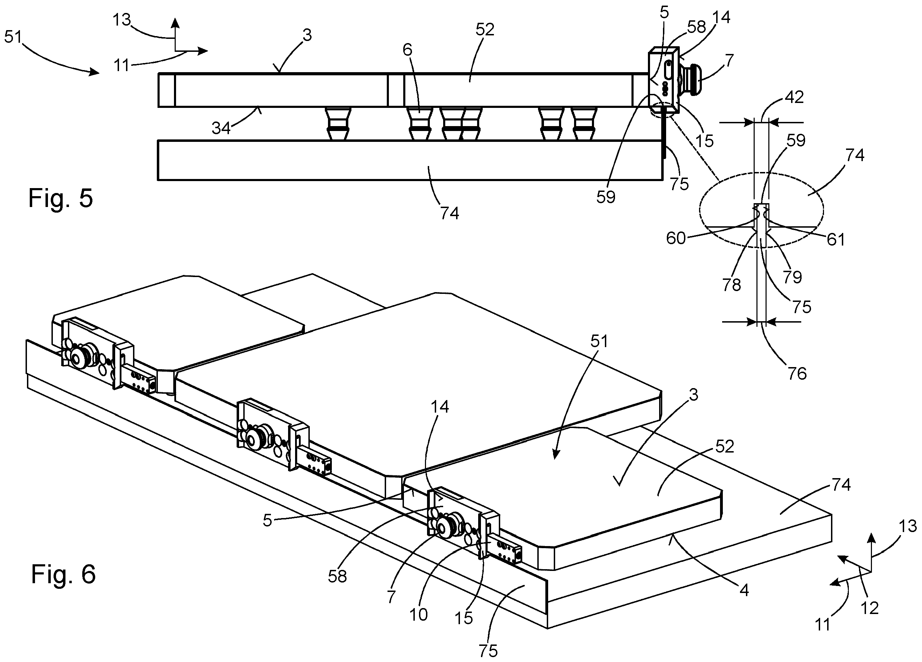

Die in den Figuren 5 und 6 gezeigte dritte Ausführungsform einer Werkstückpalette 51 unterscheidet sich von der in den Figuren 3 und 4 gezeigten zweiten Ausführungsform der Werkstückpalette 31 lediglich dadurch, dass die Quernut 59 nicht in der Trägerplatte 52, sondern in der Koppelplatte 58 ausgebildet ist. Übereinstimmend mit der zweiten Ausführungsform gemäß den Figuren 3 und 4 werden die Positionierflächen von den Seitenflächen 60, 61 der Quernut 59 gebildet. Ferner werden die Ausrichtflächen von den größten Oberflächen 78, 79 der Querleiste 75 gebildet.

Das in der Figur 7 rein schematisch gezeigte Regalspeichersystem 81 umfasst rein exemplarisch einen Rüstplatz 82, eine Bearbeitungsmaschine 100, einen als schienengebundenen Roboter ausgebildeten Manipulator 92 sowie beispielhaft zwei um 90 Grad versetzt angeordnete Regalspeicher 65, die auch als Palettenregale bezeichnet werden.

Die Regalspeicher 65 sind rein exemplarisch beidseitig offen ausgebildet und umfassen einen Regalkörper 71 sowie rein exemplarisch jeweils drei Regalplatten 74. Der Regalkörper 71 des Regalspeichers 65 weist eine linke Regalwand 66 und eine rechte Regalwand 67 auf. Die Regalwände 66, 67 sind jeweils über eine Fußplatte 102 mit der Aufstellfläche fest verbunden. In dem Raumvolumen, das vom jeweiligen Regalkörper 71 begrenzt wird, sind jeweils rein exemplarisch drei Regalplatten 74 gemäß der in den Figur 5 und 6 dargestellten Ausführungsform an den Regalwänden 66, 67 festgelegt. Alternativ können auch andere Regalplatten 72 gemäß den Ausführungsformen der Figuren 1 bis 4 für den Regalspeicher 65 verwendet werden. Jede der Regalplatten 74 weist eine Querleiste 75 auf, die in die Quernut 59 der Koppelplatte 58 eingreifen kann. Die linke Regalwand 66 und die rechte Regalwand 67 weisen in einem vorbestimmten Rasterabstand Einschubaufnahmen 68 und 69 für die Regalplatten 74 auf. Entsprechend dem Rasterabstand können die Regalplatten 74 in unterschiedlichen Höhenabständen kundenindividuell und somit variabel eingeschoben und dann mit der Regalwand verbunden werden.

Bei der Bearbeitungsmaschine 100 handelt es sich beispielsweise um ein Bearbeitungszentrum, mit dem sowohl eine Fräsbearbeitung als auch eine Drehbearbeitung eines Werkstücks durchgeführt werden kann. Die Bearbeitungsmaschine 100 kann alternativ auch für andere Materialbearbeitungen wie: Erodieren, Wasserstrahlschneiden, Lasersintern, Laserschneiden, etc. ausgebildet sein. Entscheidend ist lediglich, dass die Bearbeitungsmaschine 100 einen nicht dargestellten Werkstücktisch aufweist, auf dem Werkstückpaletten 51 (oder 1 oder 31) festgelegt werden können, um die jeweilige Bearbeitung des auf der Werkstückpalette 51 festgelegten Werkstücks 83 vornehmen zu können. Die Bearbeitungsmaschine 100 weist ein kastenförmiges Gehäuse auf, an dem eine nur schematisch gezeigte Materialschleuse 101 ausgebildet ist, bei der es sich um eine verschließbare Öffnung im Gehäuse handelt, durch die Werkstückpaletten 51 mit den Werkstücken 83 in die Bearbeitungsmaschine 100 zugeführt oder aus der Bearbeitungsmaschine 100 entnommen werden können.

Bei dem Rüstplatz 82 handelt es sich um eine Einrichtung, über die Werkstücke 83 in das Regalspeichersystem 81 ein- und ausgeschleust werden. Dies ist insbesondere dann von Interesse, wenn das Regalspeichersystem 81 von einem nicht dargestellten Sicherheitsumhausung umgeben ist, wobei der Rüstplatz 82 als Bestandteil der Sicherheitsumhausung ausgebildet sein kann und damit ein Einschleusen und Ausschleusen von Werkstückpaletten 51 mit darauf angeordneten Werkstücken 83 in den bzw. aus dem von der Sicherheitsumhausung umschlossenen Sicherheitsbereich ermöglicht.

Der Rüstplatz 82 weist rein exemplarisch ein kastenförmiges Gehäuse auf, an dem eine nur schematisch gezeigte Materialschleuse 84 ausgebildet ist, bei der es sich um eine verschließbare Öffnung im Gehäuse handelt, durch die Werkstücke 83 in das Regalspeichersystem 81 zugeführt oder aus dem Regalspeichersystem 81 entnommen werden können. Der Materialschleuse 84 ist eine Messeinrichtung 85 zugeordnet, mit der rein exemplarisch ein Querschnitt eines durch die Materialschleuse 84 bewegten Werkstücks 83 sowie der zur Aufspannung des Werkstücks 83 dienenden Werkstückpalette 51 ermittelt werden kann.

Die Messeinrichtung 85 umfasst rein exemplarisch ein horizontal ausgerichtetes Lichtgitter sowie ein vertikal ausgerichtetes Lichtgitter. Hierbei wird das horizontal ausgerichtete Lichtgitter von einem ersten Lichtsender 86 und einem gegenüberliegend angeordneten ersten Lichtempfänger 87 gebildet. Ferner wird das vertikal ausgerichtete Lichtgitter von einem zweiten Lichtsender 89 und einem gegenüberliegend angeordneten zweiten Lichtempfänger 90 gebildet. Mit den beiden Lichtgittern kann ein Querschnitt der Kombination von Werkstückpalette 1 und Werkstück 83 für das Werkstück 83 ermittelt werden, um mit Hilfe des ermittelten Querschnitts eine vorteilhafte Handhabung von Werkstückpalette 51 und darauf aufgenommenen Werkstück 83 zu ermöglichen.

Für die Querschnittsermittlung ist rein exemplarisch eine Recheneinheit 93 über eine erste Sensorleitung 88 mit dem ersten Lichtempfänger 87 und über eine zweite Sensorleitung 91 mit dem zweiten Lichtempfänger 90 verbunden, die aus den Signalen der beiden Lichtempfänger 87, 90 die Größe der Kombination aus Werkstückpalette 1 und Werkstück 83 ermitteln kann. Ferner ist die Recheneinheit 93, bei der sich insbesondere um eine speicherprogrammierbare Steuerung (SPS) handeln kann, dazu ausgebildet, die ermittelte Größe für eine Bestimmung eines Lagerplatzes zu nutzen und dem Manipulator 92 eine Positionsinformation für den Lagerplatz, an dem die Kombination aus Werkstückpalette 51 und Werkstück 83 gelagert werden kann, mitzuteilen.

Der Manipulator 92 umfasst rein exemplarisch einen schienengebunden auf dem Untergrund des Regalspeichersystems 81 verfahrbaren Wagen 94, auf dem ein Mehrachs-Industrieroboter 95, insbesondere ein 6-Achs-Industrieroboter, angebracht ist. Der Mehrachs-Industrieroboter 95 weist eine nur schematisch dargestellte Greiferachse 96 auf, die für eine formschlüssige und/oder kraftschlüssige Kopplung mit der Kupplung 7 an der Werkstückpalette 51 ausgebildet ist. Der Manipulator 92 steht über eine leitungsgebundene Steuerungsschnittstelle 97 in einer Kommunikationsverbindung mit der Recheneinheit 93, die ebenfalls mit einer leitungsgebundenen Steuerungsschnittstelle 97 ausgerüstet ist. Hiermit kann die Recheneinheit 93 dem Manipulator 92 die Positionsinformationen übermitteln, anhand derer der Manipulator 92 die Werkstückpalette 51 mit dem darauf aufgenommenen Werkstück 83 in den jeweiligen Regalspeicher 65 einlegen kann.

Die Recheneinheit 93 bildet damit ein Lagerverwaltungssystem, das die zu lagernden Werkstückpaletten 51 mit den darauf angebrachten Werkstücken 83 verwaltet und eine Optimierung der Lagerausnutzung für die beiden Regalspeicher 65 vornehmen kann. Rein exemplarisch kann vorgesehen sein, dass der Manipulator 92 während der Durchführung eines Bearbeitungsvorgang für ein Werkstück 83 auch eine Umgruppierung von Werkstückpaletten 51 mit daran aufgenommenen Werkstücken 83 vornehmen kann, um eine Belegung der beiden Regalspeicher 65 mit einer maximalen Packungsdichte für die Werkstückpaletten 51 und die daran aufgenommenen Werkstücke 83 zu gewährleisten, wobei üblicherweise keine Rücksicht auf den Bearbeitungszustand des jeweiligen Werkstücks 83 genommen wird.

## Patentansprüche

1. Werkstückpalette (1; 31; 51) zur Verwendung in einer Bearbeitungsmaschine (100), mit einer, insbesondere als Planparallelplatte ausgebildeten, Trägerplatte (2; 32; 52), die an einer Oberseite (3) eine Werkstückauflage zur Aufnahme eines Werkstücks (83) aufweist und die an einer der Oberseite (3) entgegengesetzten Unterseite (4; 34) mit Spannzapfen (6) oder mit Spannbuchsen versehen ist, die für eine Fixierung der Trägerplatte (2; 32; 52)an einem Werkstücktisch der Bearbeitungsmaschine (100) ausgebildet sind, wobei einer Vorderseite (5) der Trägerplatte (2; 32; 52), die zwischen der Oberseite (3) und der Unterseite (4) erstreckt ist, eine Kupplung (7) für eine formschlüssige Kopplung mit einem Manipulator (92) zugeordnet ist und wobei der Unterseite (4) der Trägerplatte (2; 32; 52) eine Positionierfläche (20, 21; 40, 41; 60, 61) zugeordnet ist, die mit einem Abstand von der Vorderseite (5) angeordnet ist und die in einem Winkel von 90 Grad zur Oberseite (3) und/oder parallel zur Vorderseite (5) ausgerichtet ist.

2. Werkstückpalette (1; 31; 51) nach Anspruch 1, **dadurch gekennzeichnet, dass** die Positionierfläche (20, 21; 40, 41; 60, 61) als, insbesondere der Vorderseite abgewandte, Seitenwand einer Quernut (39; 59) ausgebildet ist, wobei eine längste Erstreckungsachse der Quernut (39; 59) parallel zur Vorderseite (5) erstreckt ist.

3. Werkstückpalette (1; 31; 51) nach Anspruch 1, **dadurch gekennzeichnet, dass** die Positionierfläche (20, 21; 60, 61) als, insbesondere ebene, größte Oberfläche einer der Trägerplatte (2; 32; 52) zugeordneten, plattenförmig ausgebildeten Querleiste (9) ausgebildet ist.

4. Werkstückpalette (1; 31; 51) nach Anspruch 1, 2 oder 3, **dadurch gekennzeichnet, dass** die Kupplung (7) als Einzugsbolzen ausgebildet ist, der abschnittsweise in einer Koppelplatte (8; 58) festgelegt ist, die mit der Vorderseite (5) der Trägerplatte (2; 32; 52) verbunden ist.

5. Werkstückpalette (1; 31; 51) nach Anspruch 4, **dadurch gekennzeichnet, dass** die Querleiste (9) zwischen der Koppelplatte (8; 58) und der Trägerplatte (2; 32; 52) aufgenommen ist und in einer der Oberseite (3) der Trägerplatte (2; 32; 52) abgewandten Raumrichtung von der Koppelplatte (8; 58) und der Trägerplatte (2; 32; 52) abragt und/oder eine parallel zur Oberseite (3) ausgerichtete Unterkante (22) aufweist.

6. Werkstückpalette (1; 31; 51) nach Anspruch 4, **dadurch gekennzeichnet, dass** die Quernut (39; 59) in der Unterseite der Trägerplatte (2; 32; 52) ausgebildet ist.

7. Werkstückpalette (1; 31; 51) nach Anspruch 4, **dadurch gekennzeichnet, dass** die Quernut (39; 59) in einer, vorzugsweise parallel zur Oberseite (3) der Trägerplatte (2; 32; 52) ausgerichteten, Unterseite der Koppelplatte (8; 58) ausgebildet ist.

8. Werkstückpalette (1; 31; 51) nach Anspruch 2, **dadurch gekennzeichnet, dass** die Kupplung (7) als Einzugsbolzen ausgebildet ist, der in der Vorderseite (5) der Trägerplatte (2; 32; 52) festgelegt ist, und dass die Quernut (39; 59) in der Unterseite der Trägerplatte (2; 32; 52) ausgebildet ist.

9. Werkstückpalette (1; 31; 51) nach Anspruch 2, **dadurch gekennzeichnet, dass** die Kupplung (7) als Einzugsbolzen ausgebildet ist, der in der Vorderseite (5) der Trägerplatte (52) festgelegt ist, und dass die Quernut (59) in der Unterseite der Koppelplatte (8; 58) ausgebildet ist.

10. Regalspeichersystem (81) zur Einlagerung von Werkstückpaletten (1; 31; 51), mit einem Palettenregal (65), das einen Regalkörper (71) und wenigstens eine Regalplatte (72; 74) mit einer Auflagefläche (80) aufweist, die eine Auflageebene zur Aufnahme von Werkstückpaletten (1; 31; 51) bestimmt, wobei die Regalplatte (72; 74) einen, vorzugsweise rechtwinklig, an die Auflagefläche (80) angrenzenden, ersten Stirnflächenbereich (98) aufweist, der am hinteren Bereich des Regalkörpers (71) anliegt, und wobei die Regalplatte (72; 74) einen, vorzugsweise rechtwinklig, an die Auflagefläche (80) angrenzenden, zweiten Stirnflächenbereich (99) aufweist, der im vorderen Bereich des Regalkörpers (71) angeordnet ist, wobei beabstandet zum zweiten Stirnflächenbereich (99) eine Ausrichtfläche (16, 17; 78, 79) ausgebildet ist, die in einem 90-Grad-Winkel zur Auflagefläche (80) ausgerichtet ist und die für eine Wechselwirkung mit einer Positionierfläche (20, 21; 40, 41; 60, 61) einer Werkstückpalette (1; 31; 51) ausgebildet ist.

11. Regalspeichersystem nach Anspruch 10, **dadurch gekennzeichnet, dass** der zweite Stirnflächenbereich (99) als ebene Fläche ausgebildet ist.

12. Regalspeichersystem nach Anspruch 10 oder 11, **dadurch gekennzeichnet, dass** die Ausrichtfläche (16, 17; 78, 79) als, insbesondere dem zweiten Stirnflächenbereich (99) abgewandte, Seitenwand einer in die Auflagefläche (80) eingebrachten Quernut (73) ausgebildet ist.

13. Regalspeichersystem nach Anspruch 10 oder 11, **dadurch gekennzeichnet, dass** die Ausrichtfläche (16, 17; 78, 79) als, insbesondere ebene, größte Oberfläche einer plattenförmig ausgebildeten und quer zur Auflagefläche (80) in vertikaler Richtung nach oben abragenden Querleiste (75) ausgebildet ist.

14. Regalspeichersystem nach einem der Ansprüche 10 bis 13, **dadurch gekennzeichnet, dass** beabstandet zu dem Palettenregal (65) eine Messeinrichtung (85) angeordnet ist, die einer Bearbeitungsmaschine (82), insbesondere einer Zerspanungsmaschine, oder einer Materialschleuse einer Bearbeitungsmaschine oder einem Rüstplatz (82) zugeordnet ist und die für eine Ermittlung einer Höhenausdehnung und/oder einer Breitenausdehnung einer Werkstückpalette (1; 31; 51) und eines auf der Werkstückpalette (1; 31; 51) aufgenommenen Werkstücks (83) sowie für die Bereitstellung der ermittelten Höhenausdehnung und/oder Breitenausdehnung an ein Lagerverwaltungssystem (93) ausgebildet ist.

15. Regalspeichersystem nach Anspruch 14, **dadurch gekennzeichnet, dass** ein Lagerverwaltungssystem (93) für eine Übertragung von Messwerten mit der Messeinrichtung (85) verbunden ist und dass das Lagerverwaltungssystem (93) für eine Vorgabe von Lagerplätzen für Werkstückpaletten (1; 31; 51) oder Werkstückpaletten (1; 31; 51) mit daran aufgenommenen Werkstücken (83) im Palettenregal (65) ausgebildet ist.

16. Regalspeichersystem nach Anspruch 15, **dadurch gekennzeichnet, dass** das Lagerverwaltungssystem (93) für eine Bereitstellung von Lagerpositionsdaten an einen Manipulator (92) aus der Gruppe: Gabelstapler, selbstfahrendes Flurförderfahrzeug, mobiler und/oder linear verfahrbarer Industrieroboter, stationärer Industrieroboter, ausgebildet ist, wobei der Manipulator für eine Platzierung von Werkstückpaletten (1; 31; 51) in das Palettenregal (65) und für eine Entnahme von Werkstückpaletten (1; 31; 51) aus dem Palettenregal (65) ausgebildet ist.
